# EUROPEAN PATENT SPECIFICATION

(11) **EP 2 609 809 B1**
(45) Date of publication and mention of the grant of the patent: **18.04.2018**
(21) Application number: 11010234.0
(22) Date of filing: 27.12.2011
(51) Int. Cl.: A22C 15/00

(54) **Transfer device with split conveyor means**
Übertragungsvorrichtung mit geteilten Fördermitteln
Dispositif de transfert avec convoyeurs séparés

(43) Date of publication of application: 03.07.2013
(73) Proprietor: Poly-clip System GmbH & Co. KG, 65795 Hattersheim (DE)
(72) Inventor: Waldstädt, Manfred, 55124 Mainz (DE); Reiter, Detlef, 65205 Wiesbaden (DE)
(74) Representative: Eisenführ Speiser

(56) References cited:
- EP-A1- 1 321 393
- EP-A1- 2 008 522
- US-A1- 2006 240 754

## Description

The present invention relates to a transfer device according to the preamble of independent claim 1 as well as to a method according to independent claim 12 for transferring sausage-shaped products, like sausages, with suspension elements, like loops, from a discharge device of a clipping machine to a handling device for said sausage-shaped products.

In particular, the present invention relates to a transfer device for transferring sausage-shaped products, like sausages, with suspension elements, like loops, from a discharge device of a clipping machine to a handling device for said sausage-shaped products, wherein the transfer device comprises a conveyor means including a first conveyor belt, for receiving said sausage-shaped products from the discharge device of said clipping machine and drive means for driving said conveyor means in a first direction.

In the production of sausage-shaped products, like sausages, it is known to fill a filling material, like sausage meat, into a tubular casing which is closed at one end by a first closure clip, and to close said filled tubular casing at its second end by a second closure clip. Conventionally, together with said second clip, a suspension element, like a loop, is fed to and fitted on the second end of the filled tubular casing by the second closure clip. From EP patent 1 498 034, the above described production of sausages is known. Moreover, there is further disclosed a handling device for said sausages including a catching element for catching the suspension loop, and conveyor means for carrying said sausages out of the clipping machine as well as transferring the sausages to a storage device like a smoking rod. The conveyor means include a conveyor belt arranged in filling direction and parallel to a guide bar for guiding the loop. Also parallel to the conveyor belt, a transportation axle for transporting the sausage to a smoking rod, is coupled to the guide bar for transferring the loop attached to the sausage, which is released from the end of the conveyor belt via a chute.

EP patent application 1 321 393 discloses a belt conveyor for distributing products. The belt conveyor is supported on a footing, and has a fixed end and a movable end. By way of transverse translational motion means, the movable end of the belt conveyor may reversibly be moved between two opposite positions in a direction that is substantially perpendicular to the transportation direction of the belt conveyor, for a selective placement of the conveyed products.

In this known handling device, the transportation direction of the sausage just produced necessarily coincides with the filling direction of the tubular casing. Due to the fact that the transportation direction of the conveyor belt is restricted to its linear extension, and that the guide bar for guiding the loop attached to the sausage, is linearly aligned with the transportation axle, a device for a further treatment, like a smoking rod, has to be positioned downstream the clipping machine in the filling direction. Accordingly, an arrangement of a clipping machine and the known handling device requires additional space downstream of this arrangement for accommodating a respective treatment device, whereby the overall length of a production line is increased.

Thus, it is an object of the present invention to overcome these drawbacks and to provide a handling device, which enables a change in the transportation direction of the sausage-shaped product just produced, and thereby an arrangement of treatment devices independent from the filling direction of the clipping machine.

The aforesaid object is achieved with respect to the transfer device by the features of claim 1. The aforesaid object with respect to the method is achieved by the features of claim 9. Advantageous configurations of the invention are described in claims 2 to 8 or 10 to 12, respectively.

According to the present invention, there is provided a transfer device for transferring sausage-shaped products, like sausages, with suspension elements, like loops, from a discharge device of a clipping machine to a handling device for said sausage-shaped products. The transfer device comprises a conveyor means including a first conveyor belt, for receiving said sausage-shaped products from the discharge device of said clipping machine, and drive means for driving said conveyor means in a first direction. The inventive transfer device further includes shifting means for reversibly shifting the conveyor means in a second direction different from the first direction for removing the sausage-shaped product just received.

In this arrangement, the sausage-shaped product can be removed from the conveyor means in a direction different from the transportation direction of the discharge device and, thus different from the filling direction of the clipping machine, and also different from the transportation direction of the transfer device. In case that the sausage-shaped product being transported, for example, such that its longitudinal center axis is arranged at last substantially horizontal, is removed from the conveyor belt in a horizontal direction which does not coincide with the transportation direction of the sausage-shaped product, preferably in an angle of 90° to the transportation direction, or in a vertical direction, in particular in a downward direction, respectively, a further treatment device may be arranged in one of these directions for a further treatment of the sausage-shaped products. Thus, there is no need anymore to arrange the further treatment device behind the clipping machine, viewed in the transportation direction of the sausage-shaped products, but in any position, referred to the clipping machine.

In a further embodiment of the inventive transfer device, the conveyor means include at least one deflection or reverse roller, respectively, having a horizontally aligned rotation axis, and the shifting means comprise a first drive coupled directly or indirectly to the at least one deflection roller for reversibly shifting the conveyor means in the second direction parallel to the rotation axis of the at least one deflection roller. Accordingly, the sausage-shaped product is removed from the conveyor belt via said drive means in a lateral direction, as described in the paragraph above. The lateral movement of the conveyor means may be controlled by a control unit, e.g. on the basis of the production rate.

In order to realize conveyor means of various length, the conveyor means include a second deflection or reverse roller, respectively, having a horizontally aligned rotation axis, and the shifting means comprise a second drive coupled directly or indirectly to the second deflection roller for reversibly shifting the conveyor means in the second direction.

In an advantageous embodiment of the present invention, the conveyor means include a second conveyor belt arranged laterally and parallel to the first conveyor belt. In this embodiment, both, the first and the second conveyor belt, are reversibly shiftable in the second direction. For removing the sausage-shaped product, the first and the second conveyor belt, which are positioned closed to each other while receiving and transporting the sausage-shaped product, may simultaneously be shifted in the same direction for laterally removing the sausage-shaped product. Preferably, the first and second conveyor belts are moved in opposite direction, whereby the sausage-shaped product positioned thereon, is removed downwardly from the first and second conveyor belts. In both cases, the transportation direction of the sausage-shaped product has been changed in a direction approximately perpendicular to the filling direction of the clipping machine and/or the previous transportation direction, respectively.

For ensuring a synchronous operation and a correct alignment of the first and second conveyor belts, the conveyor means include a third and a fourth deflection or reverse roller, respectively, having rotation axis aligned to the rotation axis of the first and second deflection roller, respectively, and the shifting means comprise a third and a fourth drive coupled directly or indirectly to the third and a fourth deflection roller for reversibly shifting the conveyor means in the second direction. It has to be understood, that a control unit may be provided for controlling the drive means and the shifting means.

In a further advantageous embodiment of the transfer device, the first deflection roller of the first conveyor belt and the third deflection roller of the second conveyor belt are slidably mounted on a common axle or axis, respectively. This common axle provides a mechanical connection of the first and third deflection roller and assures not only a synchronous drive, but also an aligned shifting of the first and second conveyor belt.

When using a common axle for the first and third deflection roller for the first and second conveyor belt, the drive means for driving the conveyor means in the first direction can be coupled to said common axle so that only one drive is necessary for commonly driving the first and second conveyor belts. Moreover, a synchronization of the drive of the first and second conveyor belt is not necessary, whereby the amount of control may be reduced.

To enhance the synchronous drive as well as the shifting movement of the first and second conveyor belt, advantageously, the common axle is a polygonal axle, and the first and third deflection rollers each have a central opening of a corresponding polygonal shape.

According to a further embodiment, the transfer device comprises leading or guiding means, respectively, for guiding the sausage-shaped product when transferred in the first direction. The guiding means ensure a correct positioning of the sausage-shaped product on the transfer device, in an at least lateral direction.

For the intended treatment, the sausage-shaped product advantageously is positioned parallel to the first and/or second conveyor belt on the transfer device and centrically thereon. Accordingly, the guiding means include at least one longitudinally extending guiding element arranged parallel to the first conveyor belt.

In order to adapt the guiding means to the size, in particular to the diameter, of the sausage-shaped product, the guiding means include adjusting means for adjusting the position of the at least one guiding element in a direction at least approximately vertically to the first direction. It has to be understood, that a second guiding element may be provided, which is arrange parallel to the first guiding element and which may also be adjusted by respective adjustment means. In this case, the distance between the first and second guiding element may be adjusted to at least approximately coincide with the diameter of the sausage-shaped product

The transfer device according to the present invention further comprises receiving means including at least one receiving element for receiving the sausage-shaped product from at least the first conveyor belt when it is shifted in the second direction. The sausage-shaped product is placed on the receiving element when removed from the conveyor means, and may be delivered to a further treatment device or another conveyor device for being carried in a direction different from the filling direction of the clipping machine.

The receiving means further comprise at least one drive for reversibly moving the at least one receiving element between a receiving position immediately below to the at least one conveyor belt, and a releasing position at least approximately vertically below the receiving position, in a third direction. In the receiving position, the sausage-shaped product is placed on the receiving element when removed from the conveyor means, whereas, in the delivering position, the sausage-shaped product is delivered to a further treatment device or another conveyor device. In this configuration, the further treatment device or conveyor device, at least with respect to its treatment or conveying direction, may be arranged at least approximately independently from the feeding direction of the clipping machine. Additionally, by arranging the receiving position and the releasing position below each other and also below the conveyor means, the overall length of the production line may be shortened. It has to be noted that the sausage-shaped product can extend with at least a section of its diameter in the conveying path defined by the first and/or second conveyor belt when it is arranged on the receiving element in the receiving position.

Depending on the length of the sausage-shaped product, at least a second receiving element may be provided. Naturally, also more than two receiving elements may be arranged for securely receiving and holding the sausage-shaped product when removed from the conveyor means.

In an advantage configuration, for a controlled movement of the receiving elements, each of the receiving elements is provided with a separate drive. It is also possible, to provide only one drive for driving all receiving elements.

The transfer device according to the present invention may further comprise a guide assembly for guiding the suspension element attached to the sausage-shaped product at least in the first and third direction. The guide element in this configuration allows the placement of a sausage-shaped product on a storing device, like a smoking rod, which is not positioned in the filling direction and/or transportation direction along the conveyor means of the transfer device, respectively of the clipping machine.

Accordingly, the guide assembly includes one or several guide bars at least aligned in the first and third direction. On said guide bars, the suspension element is guided while the sausage-shaped product is conveyed in the first and third direction.

For securely holding the guide assembly or the guide bars, respectively, the guide assembly further includes support means for supporting the guide bars.

According to the resent invention, the method for transferring sausage-shaped products, like sausages, with suspension elements, like loops, from a discharge device of a clipping machine to a handling device for said sausage-shaped products comprises the steps of receiving a sausage-shaped product from the discharge device of said clipping machine by a conveyor means of the transfer device, comprising at least a first conveyor belt being driven in a first direction, delivering said sausage-shaped product to a handling device, and the step of reversibly shifting the conveyor means in a second direction different from the first direction for removing the sausage-shaped product just received.

The inventive method further comprises the steps of receiving the sausage-shaped product just removed from the conveyor means by receiving means positioned in a receiving position in immediately below to the at least first conveyor belt, and moving the sausage-shaped product received by receiving means in the receiving position into a release position at least approximately vertically below the receiving position.

In case that the conveyor means include a second conveyor belt arranged laterally and parallel to the first conveyor belt, the inventive method comprises the step of shifting the first conveyor belt in the second direction and simultaneously shifting the second conveyor belt in a direction opposite to the second direction.

The method according to the present invention thereby provides all benefits disclosed in conjunction with the inventive transfer device.

Further advantages and a preferred embodiment will be described in the following together with the drawings listed below. The expressions "left", "right", "below" and "above" used thereby, are referred to the drawings in an alignment such that the reference numbers used can be read in normal.

In the drawings:
- Fig. 1:: is a schematically perspective view to a transfer device according to the present invention, seen from above;
- Fig. 2:: is a schematically perspective rear view to a transfer device according to the present invention, seen from below;
- Fig. 3:: is a schematically perspective view to the transfer device according to Fig. 1; and
- Fig. 4:: is another schematically perspective view to the transfer device according to Fig. 1.

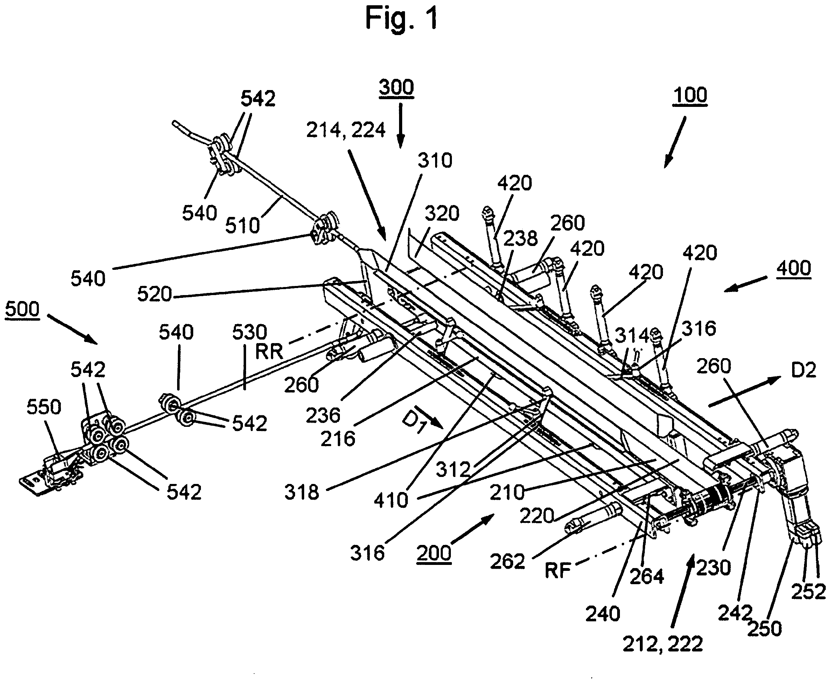

Fig. 1 shows a schematically perspective view to an embodiment of the transfer device 100 according to the present invention, seen skewed from above. The transfer device 100 consists of a conveyor means 200, guiding means 300, receiving means 400 and a guide assembly 500.

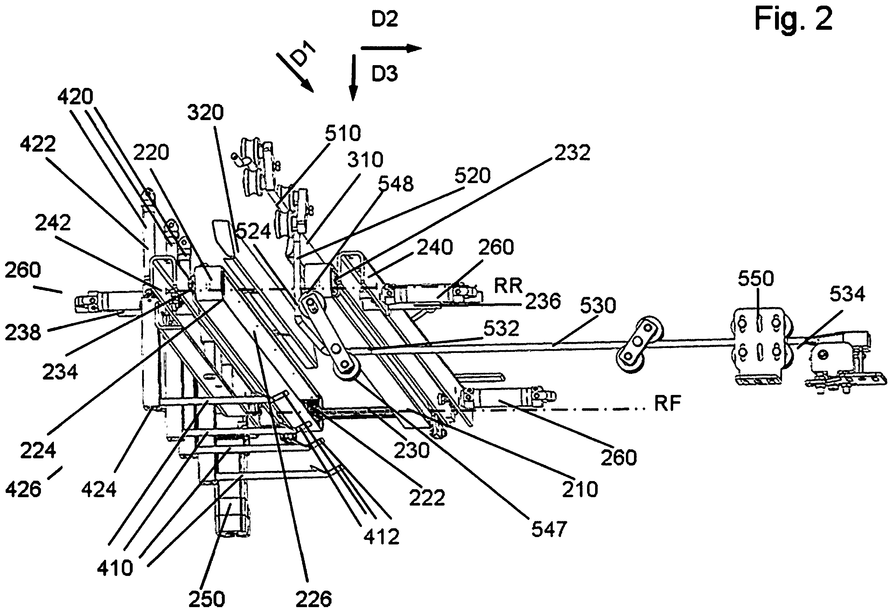

The conveyor means 200 comprise a first conveyor belt 210 and a second conveyor belt 220, each of which is wound around two deflection or reverse rollers, respectively, 212, 214; 222, 224. The deflection rollers 212, 214; 222, 224, which are not visible in Fig. 1, are coaxially and parallel arranged in pairs 212, 222; 214, 224. Conveyor belts 210, 220 thereby form horizontally aligned upper and lower runs which are positioned parallel to each other. As it can be seen in Fig. 1, the conveyor belts 210, 220 are of the same length and the deflection rollers 212, 214; 222, 224 have the same diameter. In Fig. 1, conveyor belts 210, 220 are in their closed position, i.e. the longitudinally extending edges of conveyor belts 210, 220 facing each other are in closed vicinity. The deflection rollers 212, 214; 222, 224 of conveyor means 200 are coupled to respective axles. The front most deflection rollers 212; 222, as shown in Fig. 1, are mounted on a common axle 230 having a rotation axis RF which is supported at its ends by a framework 240, 242. The rear most deflection rollers 214; 224 are mounted to separate axles 232, 234 (see Fig. 2). The left end of axle 232 of deflection roller 214 is supported by a substantially U-shaped carriage 216 positioned between the upper and lower run of conveyor belt 210, whereas the right end of axle 234 of deflection roller 224 is mounted to a substantially U-shaped carriage 226 positioned between the upper and lower run of conveyor belt 220 (see Fig. 2).

U-shaped carriages 216, 226 are coupled to framework 240, 242 in the region of their rear ends by shifting guides 234, 236, which are horizontally aligned perpendicular to the first direction D1, in a second direction D2

Accordingly, the right axle 234, which is coaxially aligned with left axle 232, is supported at its right end by framework 242, and deflection roller 224 is mounted to its left end. Axles 232, 234 have a common rotation axis RR.

For driving conveyor means 200 in the first direction D1, i.e. in the transportation direction of the transfer device along the conveyor means 200, a drive 250 is mounted at the front end of framework 242 and coupled to common axle 230. Drive 250 according to the present embodiment is a pneumatic drive having respective coupling means 252 for being coupled to a pneumatic pressure source. Alternatively, drive 250 may be of any other suitable kind, such as an electric drive.

According to the embodiment of the transfer device 100 of Fig. 1, shifting means in the form of four piston-/cylinder drives 260 are provided for reversibly shifting conveyor means 200, in particular conveyor belts 210, 220 together with deflection rollers 212, 214; 222, 224, in a second direction D2, which is different from the first direction D1. Second direction D2 can be such that it is directed in an angle of about 90° to the first direction D1 in a horizontal plane. In principle, it is also possible that the second direction D2 is arranged in another angle and/or plane to the first direction D1.

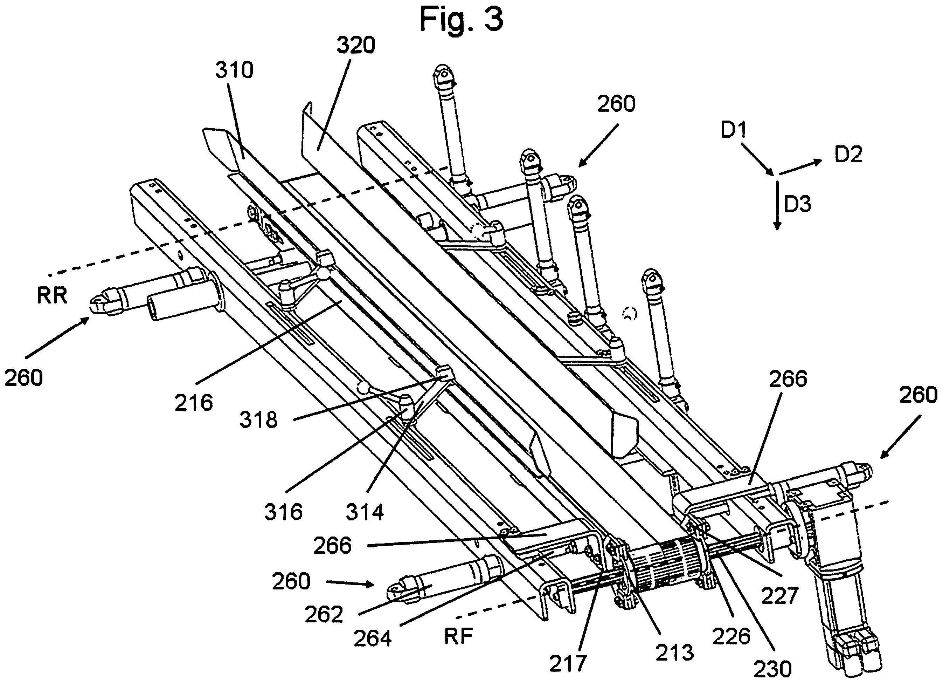

Each of the four shifting drives 260 are mounted to framework 240, 242 in close vicinity to one of deflection rollers 212, 214, 222, 224. Since the four shifting drives 260 are equally constructed, only one of them will be described in more detail below. Each of the drives 260 comprises a cylinder 262 in which a piston 264 is slidably accommodated and which is e.g. pneumatically and reversibly driven in the second direction D2. Piston 264 is coupled directly or indirectly with its free end to the respective deflection roller 212, 214; 222, 224 by respective coupling means which will be explained in more detail in conjunction with Fig. 3. Cylinder 262 is mounted to framework 240, 242 in order to move piston 264 relative to the framework and, respectively, to shift deflection rollers 212, 214; 222, 224 together with conveyor belts 210, 220 relative to axles 230, 232, 234. The free end of piston 264, which is the end facing away from cylinder 262, is coupled to carriage 216 and 226 respectively.

As it further can be seen in Fig. 1, guiding means 300 are provided, including two longitudinally extending flat guiding elements 310, 320 which are at least approximately vertically arranged immediately above conveyor belts 210, 220 and parallel thereto in their longitudinally extension. Guiding elements 310, 320 are positioned equally spaced to the matching longitudinal edges of conveyor belts 210, 220 in their closed position as shown in Fug. 1. Brackets 312, two at each guiding element 310, 320, are coupled to the outer surfaces of guiding elements 310, 320 by a linkage 318 and to the framework 240, 242 by a manually actable screw 316 which, according to the present embodiment, includes a handle. The front ends as well the rear ends of guiding elements 310, 320 are bent outwardly in the second direction D2, for avoiding damages of the sausage-shaped product and for forming an entrance aid for a sausage-shaped product at their rear end.

The transfer device 100 further comprises receiving means 400 attached to framework 242. Receiving means 400 include receiving elements 410 and drive means 420 for reversibly moving the receiving elements 410. The receiving means 400 will be explained in more detail in conjunction with Fig. 2.

According to the embodiment of the transfer device 100 as shown in Figs. 1 and 2, a guide assembly 500 is provided for guiding the suspension element attached to the sausage-shaped product, when the sausage-shaped product is treated by the transfer device 100. Guide assembly 500 comprises a first horizontal guide bar 510 which is arranged upstream the transfer device 500 and which is at least approximately aligned with the longitudinal extension of guiding element 310 in the first direction D1. First guide bar 510 has a first end 512 and a second end 514. The first end 512 of first guide bar 510 is positioned above and with a short distance to deflection roller 214 in a direction contrary to the first direction D1. The second end 514 of first guide bar 510 faces away from transfer device 100 towards a clipping machine or a discharge device of a clipping machine (both not shown), for receiving the suspension element, like a suspension loop, attached to a sausage-shaped product, from said clipping machine or said discharge device. Guide assembly 500 further comprises a second vertical guide bar 520 having a first end 522 and a second end 524. The first end 522 of second guide bar 520 is coupled to the first end 512 of first guide bar 510. The second end 524 of second guide bar 520 faces downwardly and is attached to a first end 532 of a third horizontal guide bar 530 arranged below transfer device 100, being aligned in the second direction D2 and approximately rectangular or perpendicular, respectively, to the first and second guide bars 510, 520. The second end 534 of third guide bar 530 faces away from transfer device 100 and terminates in an adapter device 550 for adapting the diameter of the second end 534 of third guide bar 530 to a treatment device, like a smoking rod, for receiving the suspension element guided along guiding assembly 500. First, second and third guide bars 510, 520, 530 are supported by support assemblies 540 including pairs of support rollers 542, wherein one roller is positioned below the respective guide bar 510, 520, 530, and one above. Rollers 542 are of a construction to allow the suspension element to pass the respective pair of rollers 542, when guided along guide bars 510, 520, 530. Rollers 542 may include a rubber coating or a brush at their outer surface directed towards the guide bars 510, 520, 530. Additionally or alternatively, the rollers 542 may be driven to enable the passage of the suspension element.

Fig. 2 is a schematically perspective rear view to a transfer device according to the present invention, seen from skewed below. In Fig. 2, conveyor belts 210, 220 are in their opened position, i.e. conveyor belts 210, 220 are moved away from each other in the second direction D2. In this position, deflection rollers 212, 214 carrying the first conveyor belt 210, are moved towards framework 240, whereas deflection rollers 222, 224 about which the second conveyer belt 220 is wound, are shifted towards framework 242. For allowing a sliding of deflection rollers 212, 222 on common axle 230, axle 230 is a polygonal axle and deflection rollers 212, 222 each has a central opening coinciding with the cross sectional shape of polygonal axle 230. Thereby, also the torque transfer from drive 250 to deflection rollers 212, 222 is assured without any slippage. In contrast to deflection rollers 212, 222, deflection rollers 214, 224 are fixedly and non-shiftable mounted on separate axles 232, 234. Axles 232, 234 are supported, and hold rotatable about their rotation axis RR by carriages 216, 226, and are shiftable in the second direction D2 together with carriages 216, 226.

It has to be noted that, reversibly shifting deflection rollers 212, 214, 222, 224, or the first and second conveyor belts 210, 220 respectively, in the second direction D2 means that deflection rollers 212 and 214 are shifted in the second direction D2 and deflection rollers 214, 224, at the same time or short thereafter, are moved in a direction contrary to direction D2 for shifting conveyor belts 210, 220 from their opened position as shown in Fig. 1 into their closed position as shown in Fig. 1. Accordingly, for shifting conveyor belts 210, 220 from their closed position into the opened position, deflection rollers 212 and 214 are shifted in a direction contrary to the second direction D2 and deflection rollers 214, 224, at the same time or short thereafter, are moved in the second direction D2.

As mentioned above, transfer device 100 further comprises receiving means 400 attached to framework 242. Receiving means 400 include, according to the present embodiment, four receiving elements 410 for receiving the sausage-shaped product when being removed from the conveyor means 200. Each receiving element 410 includes a V-shaped shelf 412 positioned centrally below first and second conveyor belt 210, 220. Shelves 412 are aligned in the first direction D1. Shelves 412 are coupled to drive means 420 by horizontal arms.

Drive means 420 for reversibly moving the receiving elements 410 are formed by vertically arranged piston-/cylinder-assemblies with a cylinder 422 mounted to framework 240, 242 and a piston 424 being movable vertically downwardly. Each shelf 412 is coupled to the lower end of the piston for being reversibly vertically movable in a third direction D3, which is rectangular or perpendicular, respectively, aligned to the first and second direction D1, D2, between a first position immediately, closed below the lower run of first and second conveyor belts 210, 220, and a second position in which the shelves 412 are in a predetermined distance from first and second conveyor belts 210, 220 in the third direction D3. An additional transport device for transporting the sausage-shaped products may be aligned with the second position of the receiving elements 410 for overtaking the sausage-shaped product from the receiving elements 410 when in the second position. Pistons 424 of drives 420 are not visible in the Figs. since coverage 426 is provided not only covering the pistons 424, but also covering the moving path of said pistons 424, preventing any engagement into the moving paths of the pistons 424.

As it further can be seen in Fig. 2, guide bars 510, 520, 530 of guide assembly 500 are coupled to each other by curved transitions or portions, respectively. Additionally, the transition between the second end 524 of second guide bar 520 and the first end 532 of third guide bar 530 includes a linear portion. Moreover, a support assembly 546 is provided in the region of the transition between the second end 524 of second guide bar 520 and the first end 532 of third guide bar 530, including a support roller 547 arranged below the first end 532 of third guide bar 530 and a support roller 548 positioned laterally to the second end 524 of second guide bar 520. Furthermore, an adjustment means in the form of a longitudinal bore is provided, in which roller 548 is mounted, for adjusting the position of roller 548 relative to the guide bars 510, 520, 530.

In Fig. 3, which is a schematically perspective view to the transfer device according to Fig. 1, for clarification matter, the guide assembly 500 has been omitted. As it can be seen in Fig. 3, deflection rollers 212, 222 are shiftable hold on common axis 230 which is mounted to and rotatable supported at its free ends by framework 240, 242. Rollers 212, 222 comprise a cylindrical part, which establishes the main body for carrying the first and second conveyor belts 210, 220 and a further cylindrical portion coupled to the main body by respective screws, and forming a circumferential collar 213, 223 arranged at the side surface of roller 212, 222 facing towards framework 240 and 242, respectively. Rollers 212, 222 are coupled to carriages 216, 226 by a coupling member 217, 227. Each of the coupling members 217, 227 includes a latch portion, which is mounted to carriage 216, 226, and a claw portion, which engages collar 213, 223 of roller 212, 222.

Covering elements in the form of approximately rectangular brackets 266 are mounted with one arm to carriages 216, 226. The other arm of brackets 266 is positioned above piston 264 of drive 260, for covering the piston 264 and its moving path for preventing any unintended engagement.

As already described in conjunction with Fig. 1, guiding means 300 are provided, including two longitudinally extending flat guiding elements 310, 320 each of which is coupled to framework 240, 244 by respective adjustment means formed by a linkage 318 at the outer surfaces of guiding elements 310, 320, a bracket 312 coupled to linkage 318 by one end and to framework 240, 242 by its other end and secured thereto by a manually actable screw 316 including a handle. For adjusting the position of guiding elements 310, 320, in particular their position relative to first and second conveyor belts 210,220, and the distance to each other, dependent on the diameter of the sausage-shaped product to be transferred, screws 316 are loosened and the guiding elements 310, 320 are shifted in the first direction D1. Thereby brackets pivot about linkage 318 at one end and about the central axis of screw 316 at their other end, and guiding elements 310, 320 are parallel shifted in the first direction D1 and in the second direction D2, whereby the distance between guiding elements 310, 320 and their position relative to framework 240, 242 is changed.

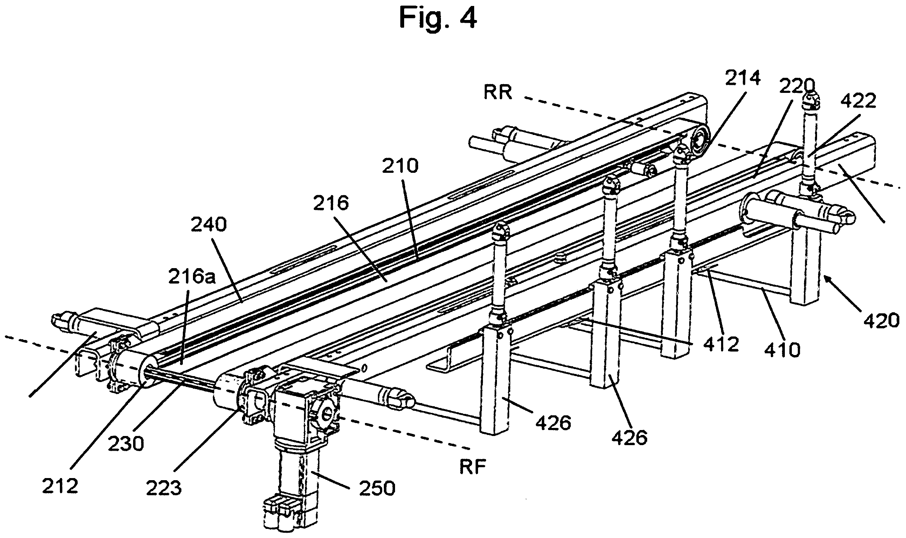

Fig. 4 is another schematically perspective view to the transfer device according to Fig. 1, wherein, for clarification matter, guiding means 300 and guide means 500 have been omitted. First and second conveyor belts 210, 220 are in their opened position. In this view, the inner surface of carriage 216, facing towards the second conveyor belt 220, is visible. Carriage 216 and carriage 226, respectively, are arranged between the upper and lower run of first conveyor belt 210, and extend substantially between rollers 212 and 214. The open side of U-shaped carriage 216 faces the second conveyor belt 220. Thereby, the "legs" of U-shaped carriage 216 are arranged parallel to the upper and lower run of conveyor belt 210, forming a support for at least to upper run of conveyor belt 216. Additionally, to enhance the sliding performance of the inner surface of conveyor belt 216, a coating is provided at the upper surface of carriage 216, between carriage 216 and the upper run of conveyor belt 216, e.g. in the form of a plastic layer or the like.

In operation, a sausage-shaped product, like a sausage, is provided to the transfer device 100 directly from a clipping machine or via a discharge device coupled to a clipping machine and the transfer device 100, respectively. Said sausage-shaped product is delivered to transfer device 100 such that its longitudinal center line is arranged horizontally in the first direction D1 with its front end ahead, i.e. the suspension element, like a suspension loop, attached to the second or rear end of the sausage-shaped product, faces in a direction contrary to the first direction D1. The suspension element is caught by a catching element in the clipping machine when being attached to the sausage-shaped product, and guided along first guide bar 510.

The sausage-shaped product fed to the transfer device 100, is conveyed by the conveyor means 200 in the first direction D1 with first and second conveyor belts 210, 220 in their closed position. Conveyor means 200 are stopped when the sausage-shaped product lays on first and second conveyor belts 210, 220 in its entire length and the suspension element is positioned in the region of the first end of guide bar 510. During positioning the sausage-shaped product on the conveyor means 200, said sausage-shaped product is laterally halt by guiding means 300 centrally at the contact line of first and second conveyor belts 210, 220. In this situation, the receiving means 400, in particular shelves 412 of receiving elements 410 are in the first position immediately, closed below the lower run of first and second conveyor belts 210, 220.

Subsequently, first and second conveyor belts 210, 220 are moved away from each other, i.e. second conveyor belt 220 is moved in the first direction D1 and first conveyor belt 210 is moved in a direction contrary to first direction D1. The sausage-shaped product positioned on first and second conveyor belts 210, 220, is removed from the conveyor means 200 and dispensed to shelves 412 of receiving elements 410. During shifting first and second conveyor belts 210, 220 in the second direction, the sausage-shaped product is laterally supported by guiding elements 310, 320, which also prevent the sausage-shaped product from being rotated about its longitudinal axis, whereby also the twisting of the suspension element while being guided along the guide bars 510, 520, is prevented.

After the sausage-shaped product is being placed at the receiving means 400, drives 420 are activated for moving the receiving elements 410 in the second position in which the shelves 412 are in a predetermined distance from first and second conveyor belts 210, 220 in the third direction D3. During this downward movement of the sausage-shaped product by the receiving elements 410, the suspension element is guided along vertically arranged second guide bar 520.

The maximum length of the downwardly directed movement path along which receiving means 400 are moved, depends on the length of the piston-/cylinder assembly or, in case of an alternative drive, on the kind of drive used. In the case that it is intended to overhand the sausage-shaped product from the receiving means 400 to a further transportation device, the length of said movement path may also depend on the kind the transportation device. It has to be understood that the transportation direction of a subsequently arranged transportation device should coincide with the direction of the third guide bar 530, which also may differ from the second direction D2.

A control unit (not shown) should be provided for controlling the activation, deactivation and the movement status of the drives 250, 260 420 of the conveyor means 200 and the receiving means 400. Moreover, said control unit may also a controlled interaction of the transfer device 100 with upstream and downstream arranged devices, like a clipping machine, a discharge device, a subsequent transportation or any suitable treatment device.

The control unit also may control the speed of the movement of the drives 250, 260 420 of the conveyor means 200 and the receiving means 400. A speed controlled transfer device may also function as a regulation device for e.g. adapting the production speed of a clipping machine to the treatment speed of the subsequent devices.

According to the embodiment of the transfer device 100 shown in Figs. 1 to 4, first and second conveyor belts 210, 220 are provided. Naturally, in a simple case, only one conveyor belt can be used in the transfer device 100 for receiving a sausage-shaped product from a clipping machine and for releasing said sausage-shaped product to a receiving means. In this case, the number of drives and the control amount may be reduced.

Moreover, the deflection rollers 212, 214; 222, 224 are described as being cylindrical rollers. The deflection rollers 212, 214; 222, 224 may also have a conical outer shape facing each other with the lower diameter. In this case, the first and second conveyor belts 210, 220 form a channel with their upper and lower runs, preventing the sausage-shaped product from lateral movement. Accordingly, guiding means 300 are not necessary anymore, whereby the construction may become simpler. Alternatively, the leg of the U-shaped carriages 216, 226 facing the upper run of first and second conveyor belt 210, 220, may by bent downwardly for allowing the upper runs of first and second conveyor belts 210, 220 forming a channel, at least under the weight of a sausage-shaped product laying thereon.

Further alternatively to the shelves 412 shown in Figs. 1 to 4, and depending on the construction of the subsequent treatment device, the receiving elements 410 may also be formed by a single channel or channel elements. Also, more than four receiving elements 410 may be provided, which, dependent on the size of the transferred sausage-shaped product, may have a larger width. Naturally shelves may be provided as interchangeable parts.

## Claims

1. A transfer device for transferring sausage-shaped products, like sausages, with suspension elements, like loops, from a discharge device of a clipping machine to a handling device for said sausage-shaped products, the transfer device (100) comprises:
a conveyor means (200) including a first conveyor belt (210), for receiving said sausage-shaped products from the discharge device of said clipping machine; and
drive means (250) for driving said conveyor means (200) in a first direction (D1);
**characterized by** shifting means (260, 236) for reversibly shifting the conveyor means (200) in a second direction (D2) different from the first direction (D1), and
further comprising guiding means (300) for guiding the sausage-shaped product when transferred in the first direction (D1) and for removing the sausage shaped product just received from the conveyor means (200),
wherein the conveyor means (200) include a first deflection roller (212) having a horizontally aligned rotation axis (RF), and wherein the shifting means (260, 236) comprise a first drive (260) coupled to the first deflection roller (212) for reversibly shifting the conveyor means (200) in the second direction (D2) parallel to the rotation axis (RF) of the first deflection roller (212), and
wherein the conveyor means (200) include a second deflection roller (214) having a horizontally aligned rotation axis (RR), and wherein the shifting means (260, 236) comprise a second drive (260) coupled to the second deflection roller (214) for reversibly shifting the conveyor means (200) in the second direction (D2).

2. The transfer device according to claim 1,
wherein the conveyor means (200) include a second conveyor belt (220) arranged laterally and parallel to the first conveyor belt (210).

3. The transfer device according to claim 2,
wherein the conveyor means (200) include a third and a fourth deflection roller (222, 224) having rotation axis aligned to the rotation axis (RF, RR) of the first and second deflection roller (212, 214), respectively, and wherein the shifting means (200) comprise a third and a fourth drive (260) coupled to the third and a fourth deflection roller (222, 224) for reversibly shifting the conveyor means (200) in the second direction (D2).

4. The transfer device according to claim 3, wherein the first deflection roller (212) and the third deflection roller (222) are slidably mounted on a common axle (230).

5. The transfer device according to claim 1,
wherein the guiding means (300) include adjusting means (314, 316, 318) for adjusting the position of the at least one guiding element (310) in a direction at least approximately vertically to the first direction (D1).

6. The transfer device according to any of claims 1 to 5,
further comprising receiving means (400) including at least one receiving element (410) for receiving the sausage-shaped product from at least the first conveyor belt (210) when shifted in the second direction (D2).

7. The transfer device according to claim 6,
wherein at least a second receiving element (410) is provided.

8. The transfer device according to any of claims 1 to 7,
further comprising a guide assembly (500) for guiding the suspension element attached to the sausage-shaped product at least in the first and in a third direction (D1, D3).

9. A method for transferring sausage-shaped products, like sausages, with suspension elements, like loops, from a discharge device of a clipping machine to a handling device for said sausage-shaped products, the method comprises the steps:
receiving a sausage-shaped product from the discharge device of said clipping machine by a conveyor means (200) of the transfer device, comprising at least a first conveyor belt (210), being driven in a first direction (D1), the conveyor means (200) include at least a first deflection roller (212) having a horizontally aligned rotation axis (RF) and a second deflection roller (214) having a horizontally aligned rotation axis (RR); the transfer device further comprises shifting means (260, 236) for reversibly shifting the conveyor means (200) in a second direction (D2) different from the first direction (D1), the shifting means (260, 236) comprise a first drive (260) coupled to the at least first deflection roller (212) and a second drive (260) coupled to the second deflection roller (214);
and delivering said sausage-shaped product to a handling device;
**characterized by** the step of reversibly shifting the conveyor means (200) in the second direction (D2) different from the first direction (D1), and
guiding the sausage-shaped product when transferred in the first direction (D1), and removing the sausage-shaped product just received, from the conveyor means (200) by guiding means (300).

10. The method according to claim 9,
further comprising the step of receiving the sausage-shaped product just removed from the conveyor means (200) by receiving means (400) positioned in a receiving position in immediately below to the at least first conveyor belt (210).

11. The method according to claim 10,
wherein the sausage-shaped product received by the receiving means (400) in the receiving position, is moved into a release position at least approximately vertically below the receiving position.

12. The method according to any of claims 9 to 11,
wherein the conveyor means (200) include a second conveyor belt (220) arranged laterally and parallel to the first conveyor belt (210), the method comprises the step of shifting the first conveyor belt (210) in the second direction (D2) and simultaneously shifting the second conveyor belt (220) in a direction opposite to the second direction (D2).

## Patentansprüche

1. Transfervorrichtung zum Überführen von wurstförmigen Produkten, wie Würsten, mit Aufhängeelementen, wie Schlaufen, von einer Austragsvorrichtung einer Clipmaschine zu einer Handhabungsvorrichtung für die wurstförmigen Produkte, die Transfervorrichtung (100) enthält:
Fördermittel (200) mit einem ersten Förderband (210) zum Aufnehmen der wurstförmigen Produkte aus der Austragsvorrichtung der Clipmaschine; und
Antriebsmittel (250) zum Antreiben der Fördermittel (200) in eine erste Richtung (D1);
**gekennzeichnet durch** Verschiebemittel (260, 236) zum reversiblen Verschieben der Fördermittel (200) in eine zweite Richtung (D2), die sich von der ersten Richtung (D1) unterscheidet, und
weiterhin enthaltend Führungsmittel (300) zum Führen des wurstförmigen Produkts, während dieses in die erste Richtung (D1) gefördert wird, und zum Entfernen des aus den Fördermitteln (200) gerade erhaltenen wurstförmigen Produkts, wobei die Fördermittel (200) eine erste Umlenkrolle (212) mit einer horizontal ausgerichteten Rotationsachse (RF) besitzen, und wobei die Verschiebemittel (260, 236) einen ersten Antrieb (260) aufweisen, der mit der ersten Umlenkrolle (212) zum reversiblen Verschieben der Fördermittel (200) in die zweite Richtung (D2) parallel zur Rotationsachse (RF) der ersten Umlenkrolle (212) gekuppelt ist, und
wobei die Fördermittel (200) eine zweite Umlenkrolle (214), die eine horizontal ausgerichtete Rotationsachse (RR) besitzt, aufweisen, und wobei die Verschiebemittel (260, 236) einen zweiten Antrieb (260) enthalten, der mit der zweiten Umlenkrolle (214) zum reversiblen Verschieben der Fördermittel (200) in die zweite Richtung (D2) gekuppelt ist.

2. Transfervorrichtung nach Anspruch 1,
wobei die Fördermittel (200) ein zweites Förderband (220) enthalten, welches seitlich und parallel zum ersten Förderband (210) angeordnet ist.

3. Transfervorrichtung nach Anspruch 2,
wobei die Fördermittel (200) eine dritte und eine vierte Umlenkrolle (222, 224) enthalten, die jeweils eine Rotationsachse aufweisen, welche zu den Rotationsachsen (RF, RR) der ersten und zweiten Umlenkrolle (212, 214) ausgerichtet sind, und wobei die Fördermittel (200) einen dritten und vierten Antrieb (260) aufweisen, der mit der dritten und vierten Umlenkrolle (222, 224) zum reversiblen Verschieben der Fördermittel (200) in die zweite Richtung (D2) gekuppelt ist.

4. Transfervorrichtung nach Anspruch 3,
wobei die erste Umlenkrolle (212) und die dritte Umlenkrolle (222) auf einer gemeinsamen Achse (230) verschiebbar montiert sind.

5. Transfervorrichtung nach Anspruch 1,
wobei die Führungsmittel (300) Einstellmittel (314, 316, 318) zum Justieren der Position mindestens eines Führungselements (310) in eine Richtung zumindest annähernd vertikal zur ersten Richtung (D1) aufweisen.

6. Transfervorrichtung nach einem der Ansprüche 1 bis 5,
weiterhin enthaltend Empfangsmittel (400), die zumindest ein Empfangselement (410) zum Aufnehmen des wurstförmigen Produkts von wenigstens dem ersten Förderband (210) aufweisen, während dieses in die zweite Richtung (D2) verschoben wird.

7. Transfervorrichtung nach Anspruch 6,
wobei zumindest ein zweites Empfangselement (410) vorgesehen ist.

8. Transfervorrichtung nach einem der Ansprüche 1 bis 7,
weiterhin enthaltend eine Führungsbaugruppe (500) zum Führen des Aufhängeelements, welches am wurstförmigen Produkt angebracht ist, in zumindest die erste und in eine dritte Richtung (D1, D3).

9. Verfahren zum Überführen von wurstförmigen Produkten, wie Würsten, mit Aufhängeelementen, wie Schlaufen, von einer Austragsvorrichtung einer Clipmaschine zu einer Handhabungsvorrichtung für die wurstförmigen Produkte, das Verfahren enthält folgende Schritte:
Empfangen eines wurstförmigen Produkts aus der Austragsvorrichtung der Clipmaschine mittels Fördermittel (200) der Transfervorrichtung, enthaltend mindestens ein erstes Förderband (210), das in eine erste Richtung (D1) angetrieben wird, wobei die Fördermittel (200) mindestens eine erste Umlenkrolle (212) mit einer horizontal ausgerichteten Rotationsachse (RF) und eine zweite Umlenkrolle (214) mit einer horizontal ausgerichteten Rotationsachse (RR) enthalten, wobei die Transfervorrichtung weiterhin Verschiebemittel (260, 236) zum reversiblen Verschieben der Fördermittel (200) in eine zweite Richtung (D2), die sich von der ersten Richtung (D1) unterscheidet, aufweist, wobei die Verschiebemittel (260, 236) einen ersten Antrieb (260), der zumindest mit der ersten Umlenkrolle (212) gekoppelt ist, und einen zweiten Antrieb (260), der mit der zweiten Umlenkrolle (214) gekoppelt ist, aufweisen;
und Fördern des wurstförmigen Produkts zu einer Handhabungseinrichtung;
**gekennzeichnet durch** den Schritt des reversiblen Verschiebens der Fördermittel (200) in die zweite Richtung (D2), die sich von der ersten Richtung (D1) unterscheidet, und
Führen des gerade aufgenommenen wurstförmigen Produkts, wenn dieses in die erste Richtung (D1) transferiert wird, und Entfernen des gerade erhaltenen wurstförmigen Produkts von den Fördermitteln (200) durch die Führungsmittel (300).

10. Verfahren nach Anspruch 9,
weiterhin enthaltend den Schritt des Empfangens des wurstförmigen Produkts, welches soeben von den Fördermitteln (200) durch die Empfangsmittel (400) entfernt wurde, die in einer Empfangsposition in unmittelbarer Nähe zu mindestens dem ersten Förderband (210) positioniert sind.

11. Verfahren nach Anspruch 10,
wobei das wurstförmige Produkt, das von den Empfangsmitteln (400) in der Empfangsposition aufgenommen wird, in eine Freigabeposition bewegt wird, die sich zumindest annähernd vertikal unter der Empfangsposition befindet.

12. Verfahren nach einem der Ansprüche 9 bis 11,
wobei die Fördermittel (200) ein zweites Förderband (220), welches seitlich und parallel zum ersten Förderband (210) angeordnet ist, aufweisen, wobei das Verfahren den Schritt des Verschiebens des ersten Förderbands (210) in die zweite Richtung (D2) und gleichzeitig Verschieben des zweites Förderbands (220) in eine Richtung, die entgegengesetzt zur zweiten Richtung (D2) ist, enthält.

## Revendications

1. Dispositif de transfert destiné au transfert de produits en forme de saucisses, comme des saucisses, avec des éléments de suspension, comme des boucles, à partir d'un dispositif de déchargement d'une machine d'écrêtage vers un dispositif de manipulation pour lesdits produits en forme de saucisses, le dispositif de transfert (100) comprend:
un moyen de transport (200) incluant une première bande transporteuse (210), pour recevoir lesdits produits en forme de saucisses à partir du dispositif de déchargement de ladite machine d'écrêtage; et
un moyen d'entraînement (250) destiné à entraîner ledit moyen de transport (200) dans une première direction (D1);
**caractérisé par** un moyen de commutation (260, 236) pour commuter de manière réversible le moyen de transport (200) dans une deuxième direction (D2) différente de la première direction (D1), et
comprenant en outre un moyen de guidage (300) pour guider le produit en forme de saucisse lorsqu'il est transféré dans la première direction (D1) et pour retirer le produit en forme de saucisse qui vient d'être reçu du moyen de transport (200),
dans lequel le moyen de transport (200) inclut une première poulie de renvoi (212) ayant un axe de rotation aligné horizontalement (RF), et dans lequel le moyen de commutation (260, 236) comprend un premier entraînement (260) couplé à la première poulie de renvoi (212) pour commuter de manière réversible le moyen de transport (200) dans la deuxième direction (D2) parallèle à l'axe de rotation (RF) de la première poulie de renvoi (212), et
dans lequel le moyen de transport (200) inclut une deuxième poulie de renvoi (214) ayant un axe de rotation aligné horizontalement (RR), et dans lequel le moyen de commutation (260, 236) comprend un deuxième entraînement (260) couplé à la deuxième poulie de renvoi (214) pour commuter de manière réversible le moyen de transport (200) dans la deuxième direction (D2).

2. Dispositif de transfert selon la revendication 1,
dans lequel le moyen de transport (200) inclut une deuxième bande transporteuse (220) disposée latéralement et parallèle à la première bande transporteuse (210).

3. Dispositif de transfert selon la revendication 2,
dans lequel le moyen de transport (200) inclut une troisième et une quatrième poulie de renvoi (222, 224) ayant un axe de rotation aligné sur l'axe de rotation (RF, RR) de la première et de la deuxième poulie de renvoi (212, 214), respectivement, et dans lequel le moyen de commutation (200) comprend un troisième et un quatrième entraînement (260) couplés à la troisième et à la quatrième poulie de renvoi (222, 224) pour commuter de manière réversible le moyen de transport (200) dans la deuxième direction (D2).

4. Dispositif de transfert selon la revendication 3,
dans lequel la première poulie de renvoi (212) et la troisième poulie de renvoi (222) sont montées de manière coulissante sur un arbre commun (230).

5. Dispositif de transfert selon la revendication 1,
dans lequel le moyen de guidage (300) inclut un moyen d'ajustement (314, 316, 318) pour ajuster la position dudit au moins un élément de guidage (310) dans une direction au moins approximativement verticale par rapport à la première direction (D1).

6. Dispositif de transfert selon l'une quelconque des revendications 1 à 5, comprenant en outre un moyen de réception (400) incluant au moins un élément de réception (410) pour recevoir le produit en forme de saucisse à partir d'au moins la première bande transporteuse (210) lorsqu'elle est commutée dans la deuxième direction (D2).

7. Dispositif de transfert selon la revendication 6,
dans lequel au moins un deuxième élément de réception (410) est fourni.

8. Dispositif de transfert selon l'une quelconque des revendications 1 à 7, comprenant en outre un ensemble de guidage (500) pour guider l'élément de suspension fixé au produit en forme de saucisse au moins dans la première et dans une troisième direction (D1, D3).

9. Procédé de transfert de produits en forme de saucisses, comme des saucisses, avec des éléments de suspension, comme des boucles, à partir d'un dispositif de déchargement d'une machine d'écrêtage vers un dispositif de manipulation pour lesdits produits en forme de saucisses, le procédé comprend les étapes suivantes:
réception d'un produit en forme de saucisse à partir du dispositif de déchargement de ladite machine d'écrêtage par un moyen de transport (200) du dispositif de transfert, comprenant au moins une première bande transporteuse (210), étant entraînée dans une première direction (D1), le moyen de transport (200) inclut au moins une première poulie de renvoi (212) ayant un axe de rotation aligné horizontalement (RF) et une deuxième poulie de renvoi (214) ayant un axe de rotation aligné horizontalement (RR) ;
le dispositif de transfert comprend en outre un moyen de commutation (260, 236) pour commuter de manière réversible le moyen de transport (200) dans une deuxième direction (D2) différente de la première direction (D1), le moyen de commutation (260, 236) comprend un premier entraînement (260) couplé au moins à la première poulie de renvoi (212) et un deuxième entraînement (260) couplé à la deuxième poulie de renvoi (214) ;
et la distribution dudit produit en forme de saucisse à un dispositif de manipulation;
**caractérisé par** l'étape consistant à commuter de manière réversible le moyen de transport (200) dans la deuxième direction (D2) différente de la première direction (D1), et
à guider le produit en forme de saucisse lorsqu'il est transféré dans la première direction (D1), et à retirer le produit en forme de saucisse qui vient d'être reçu, du moyen de transport (200) par le moyen de guidage (300).

10. Procédé selon la revendication 9,
comprenant en outre l'étape de réception du produit en forme de saucisse qui vient d'être retiré du moyen de transport (200) par le moyen de réception (400) positionné dans une position de réception immédiatement en dessous au moins de la première bande transporteuse (210).

11. Procédé selon la revendication 10,
dans lequel le produit en forme de saucisse reçu par le moyen de réception (400) dans la position de réception est déplacé dans une position de libération au moins à peu près verticalement en dessous de la position de réception.

12. Procédé selon l'une quelconque des revendications 9 à 11,
dans lequel le moyen de transport (200) inclut une deuxième bande transporteuse (220) disposée latéralement et parallèle à la première bande transporteuse (210), le procédé comprend l'étape de commutation de la première bande transporteuse (210) dans la deuxième direction (D2) et de commutation simultanée de la deuxième bande transporteuse (220) dans une direction opposée à la deuxième direction (D2).
